# DEMANDE DE BREVET EUROPEEN

(11) **EP 3 708 307 A1**
(43) Date de publication de la demande: **16.09.2020**
(21) Numéro de dépôt: 19162615.9
(22) Date de dépôt: 13.03.2019
(51) Int. Cl.: B25J 9/04, B25J 18/02, B25J 18/04

(54) **DISPOSITIF DE DÉPLACEMENT DE PIÈCES**

(71) Demandeur: Mikron SA Boudry, 2017 Boudry (CH)
(72) Inventeur: Rochat, Lionel, 2016 Cortaillod (CH); Chopard, Olivier, 25500 Montlebon (FR); Caseiro Costa, Stéphane, 1907 Saxon (CH)
(74) Mandataire: P&TS SA (AG, Ltd.)

(57) **Abrégé**

Dispositif (1) de déplacement de pièce (2), destiné à soulever des pièces (2) et les positionner selon une orientation angulaire définie, comprenant un premier moteur (3), une tige filetée (4) mise en rotation par le premier moteur (3), un pont (5) coopérant avec la tige filetée (4) de manière à ce que la rotation de ladite tige soit susceptible d'assurer un déplacement axial du pont (5), une seconde tige (6) traversant ledit pont (5) et montée libre en rotation par rapport audit pont (5), un second moteur (7) agencé pour contrôler la position angulaire de la seconde tige (6), un organe (8) de préhension, disposé à l'extrémité libre (9) de la seconde tige (6), la seconde tige (6) étant liée axialement audit pont de manière à se déplacer axialement avec ledit pont (5).

## Description

### Domaine technique

La présente invention concerne un dispositif de déplacement de pièce destiné à soulever des pièces et à les positionner selon une orientation angulaire définie.

### Etat de la technique

Dans de nombreux secteurs industriels, en particulier pour des opérations de montage ou d'assemblage, il est courant de devoir procéder à des opérations consistant à saisir une pièce à l'aide d'un organe de préhension, pour la déplacer et ensuite la positionner sur un support de travail ou sur un assemblage en cours de réalisation. De nombreux types de systèmes de préhension permettent de mettre en oeuvre une telle fonction.

On connaît par exemple les bras articulés robotisés, permettant de saisir une pièce à l'aide d'une pince ou autre organe de préhension, pour ensuite la déplacer et la poser dans la configuration requise. Ces bras robotisés, en général multi-usages, sont utiles pour des opérations de haute technicité, requérant par exemple de multiples degrés de liberté. Une utilisation pour des tâches simples et répétitives est peu rentable avec des outils aussi sophistiqués.

On connaît d'autres types de dispositifs, plus adaptés aux tâches en très grande série.

Par exemple, le document WO2004026016 décrit un dispositif de déplacement de pièces comportant un arbre cannelé agencé pour se déplacer axialement pour soulever un objet à déplacer, et en rotation, pour orienter cet objet. A cette fin, le dispositif comprend un module d'élévation, coopérant avec l'arbre cannelé et un module de rotation, lui aussi coopérant avec l'arbre cannelé. L'architecture résultante, permettant ce double mouvement d'un arbre unique, est complexe et coûteuse à réaliser et présente un niveau de fiabilité incertain. Le guidage de l'arbre cannelé est effectué au moyen d'un palier en plusieurs sections supporté par un cadre fixe, et par un écrou à son extrémité basse. Le palier doit donc à la fois permettre un déplacement axial de l'arbre cannelé, et sa rotation. La fabrication de ce palier et de l'écrou est délicate et la précision de coaxialité qui peut être obtenue est limitée par les jeux inhérents. La réalisation est rendue encore plus délicate par la présence d'une plaque de transfert (pont) assurant le déplacement vertical de l'axe cannelé et elle aussi guidée verticalement par un rail à billes monté sur le cadre. Le système est ainsi fortement hyperstatique en sorte que des jeux importants doivent être prévus pour permettre le montage et le déplacement vertical de l'arbre cannelé sans frottements excessifs contre les différentes sections du palier ou contre le pont.

Le document US4719810 divulgue une tête de préhension déplacée verticalement par une vis mais ne pouvant pas tourner.

Le document US2002053134 divulgue un dispositif de déplacement de pièces comprenant une série de têtes de préhension en relation avec un système d'élévation de ces têtes. Dans ce dispositif, les têtes sont entrainées en rotation par une courroie et un moteur communs.

Puisqu'aucune solution des solutions actuelles n'est véritablement optimale, il existe donc un besoin pour un dispositif de déplacement de pièce qui soit simple, robuste, tout en permettant des niveaux élevés de productivité.

### Bref résumé de l'invention

Un but de la présente invention est de proposer un dispositif de préhension et déplacement de pièce qui soit simple, fiable et peu coûteux.

Un autre but de l'invention est de proposer un dispositif de préhension et déplacement de pièce permettant d'atteindre un haut niveau de précision dans la mise en place des pièces.

Un autre but de l'invention est de proposer un dispositif de préhension et déplacement de pièce permettant d'atteindre un haut niveau de productivité.

Selon l'invention, ces buts sont atteints notamment au moyen d'un dispositif de déplacement de pièce, destiné à soulever des pièces et à les positionner selon une orientation angulaire définie, comprenant :
i) un premier moteur ;
ii) une tige filetée mise en rotation par le premier moteur ;
iii) un pont, coopérant avec la tige filetée de manière à ce que la rotation de ladite tige soit susceptible d'assurer un déplacement axial du pont ;
iv) une seconde tige traversant ledit pont et montée libre en rotation par rapport audit pont;
v) un second moteur, agencé pour contrôler la position angulaire de la seconde tige;
vi) un organe de préhension, disposé à l'extrémité libre de la seconde tige (6);
dans lequel la seconde tige est liée axialement audit pont de manière à se déplacer axialement avec ledit pont,
et dans lequel le déplacement axial du pont (5) est guidé uniquement par la première tige (4).

Cette architecture permet de mettre en oeuvre de façon simple les deux types de déplacements requis, à savoir un déplacement axial, mis en oeuvre par un premier moteur, et un déplacement angulaire, mis en oeuvre par un second moteur, chacun des moteurs agissant sur un arbre qui lui est propre, simplifiant ainsi l'agencement mécanique. Les moteurs indépendants agissant sur des arbres indépendants permettent d'atteindre de hauts niveaux de précisions dans le positionnement des pièces à déplacer. Le système étant simple, il est fiable. L'agencement à faible inertie permet d'atteindre de hauts niveaux de productivité.

Le déplacement axial du pont peut être guidé uniquement par la première tige, de préférence sans guidage supplémentaire par rapport aux éléments fixes du dispositif. On évite ainsi un guidage hyperstatique du pont.

Le déplacement axial de la seconde tige est avantageusement transmis par le pont.

Un ou des paliers supplémentaires peuvent être prévus autour de la seconde tige. Le jeu entre la seconde tige et ledit au moins un palier est de préférence moins important que le jeu entre la seconde tige et le pont en sorte que le guidage de la seconde tige dépend essentiellement des paliers.

On évite ainsi un guidage hyperstatique qui serait provoqué si la seconde tige était guidée à la fois par un pont guidé et par des paliers.

Un dispositif peut comporter une pluralité de dites secondes tiges, afin de saisir et de positionner plusieurs pièces.

Avantageusement, chaque dite seconde tige est associée à un dit second moteur, la position angulaire de chaque dite seconde tige pouvant ainsi être contrôlée indépendamment.

Chaque dite seconde tige est avantageusement aussi associée à un dit premier moteur, la position axiale de chaque dite seconde tige pouvant ainsi être contrôlée indépendamment

Selon un mode de réalisation avantageux, le dispositif comprend une courroie reliant le second moteur à la seconde tige via une douille agencée autour de la seconde tige. Le mode de transmission est simple, fiable et à faible inertie.

Une seule douille est de préférence associée à la seconde tige.

De manière avantageuse, la seconde tige est cannelée. Cette mise en oeuvre permet de réaliser des positionnements angulaires très précis et de les maintenir même lors de déplacements axiaux.

Egalement de manière avantageuse, la seconde tige est montée coulissante axialement dans la douille. Cet agencement permet le découplage axial de la tige par rapport à son moteur.

Selon un mode de réalisation avantageux, la tige filetée est une vis à billes. Ce type de tige procure un haut niveau de précision.

Selon un mode de réalisation avantageux, le dispositif comprend un frein à électroaimant pour bloquer la seconde tige indépendamment des moteurs.

L'organe de préhension peut comprendre un préhenseur agissant mécaniquement, par exemple avec des griffes mobiles.

En variante, d'autres modes de préhension sont utilisés, comme par exemple à l'aide d'un électro-aimant pour des pièces métalliques, une pince, un crochet, etc.

Dans un autre mode de réalisation, l'organe de préhension comprend un système à vacuum, la seconde tige étant creuse, le dispositif comprenant un système d'aspiration avec une tubulure d'aspiration agencée en coopération fluidique avec la seconde tige, et reliant cette dernière à une pompe à vide.

### Brève description des figures

Des exemples de mise en oeuvre de l'invention sont indiqués dans la description illustrée par les figures annexées dans lesquelles :
- La figure 1 est une représentation schématique en perspective d'un exemple de dispositif de déplacement de pièce ;
- La figure 2 est une vue de dessus du dispositif illustré à la figure 1 ;
- La figure 3 est une vue de côté du dispositif illustré à la figure 1.

### Exemple(s) de mode de réalisation de l'invention

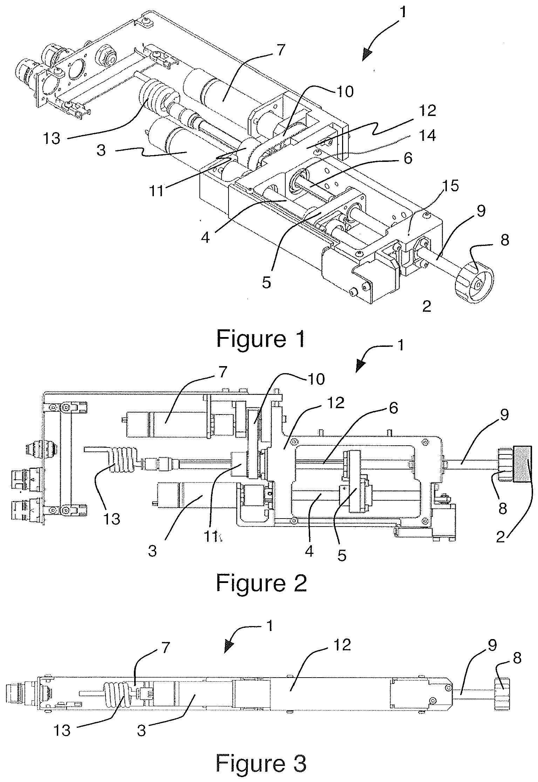

Les figures 1 à 3 illustrent un exemple de dispositif 1 de déplacement de pièce 2. Ce dispositif permet de saisir une pièce, par exemple une pièce destinée à un produit en cours d'assemblage se trouvant par exemple dans un bac de réserve de pièces, de la soulever par un déplacement axial, et de la positionner selon une orientation angulaire définie en fonction de la tâche suivante à accomplir, comme par exemple poser la pièce sur un socle ou sur un assemblage en cours de réalisation.

Le dispositif 1 comprend un moteur 3 de déplacement axial, prévu pour assurer le déplacement axial (par exemple vertical) de la pièce 2. Le moteur 3 de déplacement axial coopère avec une tige filetée 4, avantageusement une vis à billes, susceptible d'être mise en rotation par le moteur 3.

Tel qu'illustrée, la tige filetée 4 coopère avec un pont 5 de manière à ce que la rotation de la tige filetée 4 engendre un déplacement axial du pont 5 le long de la tige 4. Le pont n'est pas guidé autrement que la tige filetée 4; le dispositif est donc dépourvu de rails de guidage ou de coulisses pour guider ce pont.

Une tige cannelée 6 est montée libre en rotation à travers le pont 5. La tige cannelée 6 est toutefois fixe axialement par rapport au pont 5 et suit donc le pont lors de ses déplacements axiaux.

La tige cannelée 6 est guidée par un palier supérieur 14 et par un palier inférieur 15 montés dans le châssis fixe 12. Le palier 15 peut être par exemple une douille à billes. Le jeu entre la tige 6 et ces paliers est de préférence moins important que le jeu entre cette tige et le pont 5, en sorte que le positionnement radial de cette tige dépend essentiellement des paliers. On évite ainsi un système hyperstatique.

Un moteur 7 de déplacement angulaire coopère avec la tige cannelée 6 afin de commander sa position angulaire. La tige cannelée porte un organe de préhension 8 à son extrémité libre 9.

Cet organe de préhension 8 est agencé à la base de la tige cannelée 6 et permet de saisir les pièces 2 à manipuler. Dans un mode de réalisation, la préhension des pièces est assurée par succion. Tel qu'illustré, la tige 6 est creuse et reliée à une tubulure d'aspiration 13 en coopération fluidique avec une pompe à vide (non montrée), ou tout autre moyen permettant de générer un effet de succion.

Dans un autre mode de réalisation préférentiel, la préhension est assurée par un élément mobile mécaniquement, par exemple une ou des griffes.

L'architecture avec les deux tiges 4 et 6, chacune commandée par son propre moteur, respectivement 3 et 7, permet de découpler les mouvements axiaux et angulaires, pour une plus grande simplicité architecturale, et un niveau de fiabilité élevé. L'ensemble constitué par le moteur de déplacement axial 3 et de la tige filetée 4 permet de générer le déplacement axial du pont 5 monté sur la tige filetée. Le pont 5, mobile axialement, procure le déplacement axial de la tige cannelée 6.

Le moteur 7 de déplacement angulaire, coopérant avec la tige cannelée 6 par l'entremise d'une courroie 10 et d'une douille 11 (ou écrou) montée coulissante sur la tige 6, permet de contrôler la position angulaire requise de la pièce 2 avant de la saisir ou de la relâcher à l'endroit souhaité.

Le dispositif peut comporter un frein, par exemple un frein à électroaimant, afin de bloquer le déplacement de la première tige (tige de déplacement axial) indépendamment de l'action des moteurs 3, 7. Ce frein permet par exemple de garantir une position fixe de la pièce saisie, la tige 2 étant immobile.

Le dispositif 1 de déplacement de pièce est par exemple installé sur une machine de montage ou d'assemblage, fournissant avantageusement un ou plusieurs autres degrés de liberté afin de permettre le déplacement de la pièce 2 d'un point à un autre, comme par exemple d'un bac de réserve de pièces vers un point de montage ou d'assemblage.

Le dispositif peut être associé à un portique non représenté afin de permettre un déplacement selon deux directions horizontales X et Y.

Il est possible de prévoir plusieurs secondes tiges 6 montées parallèlement sur le même dispositif, afin de saisir simultanément ou en parallèle plusieurs pièces. La construction proposée est particulièrement compacte et permet de rapprocher ces tiges, ou de les placer à des distances arbitraires avec des entraxes quelconques. Les mouvements axial et en rotation de chaque seconde tige sont de préférence commandés indépendamment des autres secondes tiges du dispositif, chaque seconde tige étant associée à deux moteurs 3, 7.

### Numéros de référence employés sur les figures

- 1: Dispositif de déplacement de pièces
- 2: Pièce
- 3: Moteur de déplacement axial
- 4: Tige filetée
- 5: Pont
- 6: Tige cannelée
- 7: Moteur de déplacement angulaire
- 8: Organe de préhension
- 9: Extrémité de la tige cannelée
- 10: Courroie
- 11: Douille
- 12: Châssis
- 13: Tubulure d'aspiration
- 14: Palier supérieur
- 15: Palier inférieur

## Revendications

1. Dispositif (1) de déplacement de pièce (2), destiné à soulever des pièces (2) et à les positionner selon une orientation angulaire définie, comprenant :
i) un premier moteur (3) ;
ii) une tige filetée (4) mise en rotation par le premier moteur (3) ;
iii) un pont (5), coopérant avec la tige filetée (4) de manière à ce que la rotation de ladite tige soit susceptible d'assurer un déplacement axial du pont (5) ;
iv) une seconde tige (6) traversant ledit pont (5) et montée libre en rotation par rapport audit pont (5) ;
v) un second moteur (7), agencé pour contrôler la position angulaire de la seconde tige (6) ;
vi) un organe (8) de préhension, disposé à l'extrémité libre (9) de la seconde tige (6) ;
dans lequel la seconde tige (6) est liée axialement audit pont de manière à se déplacer axialement avec ledit pont (5),
et dans lequel le déplacement axial du pont (5) est guidé uniquement par la première tige (4).

2. Dispositif selon la revendication 1, dans lequel le déplacement axial de la seconde tige est transmis par le pont (5).

3. Dispositif selon la revendication 2, comprenant au moins un palier (14, 15) de guidage de la seconde tige (6),
le jeu entre la seconde tige (6) et ledit au moins un palier étant moins important que le jeu entre la seconde tige (6) et le pont (5) en sorte que le guidage de la seconde tige dépende essentiellement du ou des paliers.

4. Dispositif (1) de déplacement de pièce (2) selon l'une quelconque des revendications 1 à 3, comprenant une pluralité de dites secondes tiges, chaque dite seconde tige étant associée à un dit second moteur, la position angulaire de chaque dite seconde tige pouvant ainsi être contrôlée indépendamment.

5. Dispositif (1) de déplacement de pièce (2) selon l'une quelconque des revendications 1 à 4, comprenant une courroie (10) reliant le second moteur (7) à la seconde tige (6) via une douille (11) agencée autour de la seconde tige (6) pour transmettre les rotations du moteur à ladite seconde tige.

6. Dispositif (1) de déplacement de pièce (2) selon la revendication 5, ladite seconde tige étant associée à une seule dite douille

7. Dispositif (1) de déplacement de pièce (2) selon l'une quelconque des revendications 5 ou 6, dans lequel la seconde tige (6) est cannelée.

8. Dispositif (1) de déplacement de pièce (2) selon l'une quelconque des revendications 5 à 7, dans lequel la seconde tige (6) est montée coulissante axialement dans la douille (11).

9. Dispositif (1) de déplacement de pièce (2) selon l'une quelconque des revendications précédentes, comprenant un frein à électroaimant pour bloquer la première tige (4) indépendamment des moteurs.

10. Dispositif (1) de déplacement de pièce (2) selon l'une quelconque des revendications précédentes, dans lequel la tige filetée (4) est une vis à billes.

11. Dispositif (1) de déplacement de pièce (2) selon l'une quelconque des revendications précédentes, l'organe de préhension comprenant un préhenseur agissant mécaniquement.

12. Dispositif (1) de déplacement de pièce (2) selon l'une quelconque des revendications 1 à 10, l'organe de préhension comprenant un système à vacuum, la seconde tige (9) étant creuse, le dispositif comprenant un système d'aspiration avec une tubulure d'aspiration (13) agencée en coopération fluidique avec la seconde tige, et reliant cette dernière à une pompe à vide.
